Europäisches Patentamt

European Patent Office

Office européen des brevets

(11) Publication number: **0 505 849 A1**

# EUROPEAN PATENT APPLICATION

(21) Application number: **92104361.8**

(22) Date of filing: **13.03.92**

(51) Int. Cl.⁵: **C08J 9/14**, //C08L25/06

(30) Priority: **25.03.91 US 674194**

(43) Date of publication of application:
**30.09.92 Bulletin 92/40**

(84) Designated Contracting States:
**AT BE CH DE DK ES FR GB GR IT LI LU MC NL PT SE**

(71) Applicant: **BOEHRINGER INGELHEIM KG**

**W-6507 Ingelheim am Rhein(DE)**

(72) Inventor: **Ehrenfreund, Herbert**
**41 Yankee Peddler Path**
**Madison, Connecticut 06443(US)**

(74) Representative: **Freylinger, Ernest T.**
**Office de Brevets Ernest T. Freylinger 321,**
**route d'Arlon Boîte Postale 48**
**L-8001 Strassen(LU)**

(54) **Method of making a polystyrene foam.**

(57) A method of making a styrenic foam wherein a lower aliphatic alcohol is employed as an expanding agent. The aliphatic alcohol is preferably isopropyl alcohol and styrenic polymer is preferably polystyrene.

EP 0 505 849 A1

The present invention relates to a method of making a styrenic foam by the extrusion and structural foam molding processes.

Structural foam processing and extrusion processing basically involve the formation of a foam or expanded product from a mixture of a foamable polymer, a nucleating agent and a blowing or expanding agent. In the case of extrusion processing, the three ingredients are thoroughly mixed in an extruder and kept under pressure until the mixture exits the extruder die whereupon the blowing agent becomes gaseous, and attaches to the nucleating agent and forms a cellular structure. The structural foam molding process is similar, however the mixture is injected into a mold wherein it is expanded by the blowing agent to form a cellular structure which fills the mold cavity. The percent of expansion is controlled by the time and temperature relationship.

In both the extrusion process and the structural foam process, the size of the cells of the cellular structure produced and the number of cells are primarily controlled by the amount of nucleating agent used, while the density of the foam is primarily controlled by the amount and type of blowing agent used.

In the processing of low density foams (density below about 10-15 lbs./cu.ft. (i.e. 160-240 kg/m3)), the blowing agents of choice have been chloroflurocarbons and hydrocarbons. The chlorofluro-carbons that have gained the widest acceptance are the fully halogenated type, commonly known as CFCs. In recent years, however, it has been established that the use of CFCs contribute to the thinning of the earth's ozone layer. Of late, HCFCs (not fully halogenated chloroflurocarbons) have been substituted for the CFCs as they are less harmful to the ozone layer. While hydrocarbons per se do not appear to effect the ozone layer, the use of these materials are regulated like other volatile compounds because of their harmful effect on the air quality of the lower atmosphere and their flammability.

The object of the present invention is to provide a method of making styrenic polymer foam which does not employ CFCs, HCFCs and/or harmful hydrocarbons as a blowing agent.

This problem is solved by a method of making a styrenic foam comprising charging an extruder with a mixture of a styrenic polymer and a nucleating agent, melting said mixture in said extruder, adding a lower aliphatic alcohol blowing agent to said melted mixture and extruding said melted mixture through a die to form said foam.

In accordance with the method of the present invention, a styrenic polymer such as a polystyrene is mixed with a suitable nucleating agent. Said mixture is charged to an extruder where a lower aliphatic alcohol blowing agent is added thereto and extruded through a die or into a suitable mold to form a foamed polymer.

It will be appreciated that the present invention provides a method of making styrenic polymer foam using a lower aliphatic alcohol as a blowing agent.

It will further be appreciated that the present invention provides a method of making polystyrene foams by extrusion processing and structural foam processing techniques wherein the only blowing agent employed is a lower aliphatic alcohol.

The polymeric foams produced by the present invention are styrenic polymer foams, which may be formed from polymers or copolymers. For example, the styrenic polymer is preferably a polystyrene.

The blowing agent or expanding agent used in the present invention is a lower aliphatic alcohol such as methyl alcohol, ethyl alcohol, propyl alcohol, isopropyl alcohol and butyl alcohol. Isopropyl alcohol is the preferred blowing agent.

The blowing agent of the present invention is employed in amounts of from about 3 wt. % to about 15 wt. %. Experimentation has shown that said amounts of alcohol blowing agent used in the present invention are from about 20% to 30% less than amounts of HCFC used in the prior art.

In order to extrude polystyrene foam using a lower aliphatic alcohol as a blowing agent, it is desirable that the pressure in the extrusion system be maintained at a level which is lower than that when producing a polymeric foam using HCFCs. This increases the gas present in the polymer melt and lowers the viscosity of same thus resulting in higher blow during forming. This permits the use of decreased levels of blowing agent.

The method of the present invention will best be illustrated by the following examples wherein foam samples were made using a 2 1/2 inch (about 63 mm) diameter, 40:1 Length to Diameter extruder. The barrel length of the extruder is divided into 5 heating zones. Heating zones 1, 2 and 3 are using to melt and meter the polymer to be extruded. The expanding agent is introduced into the melt near the end of zone 3 where it is mixed and absorbed into the polymer melt. Zones 4 and 5 are oil temperature controlled heating zones which are provided with a suitable heat exchanger. An extruder adapter and a die adapter are affixed to the end of the extruder and provide for 2 more separate electrically heated zones. The die which is affixed to the die adapter is oil temperature controlled. A water cooled sizing drum and a winder are located downstream of the die.

Various samples of extrudable polystyrene polymer were prepared as follows:

**Sample 1** - 50 lbs. of Dylene 8 - a polystyrene polymer having a density of 1.05 and a flexural modulus of 4.5 made by Arco Chemical Corporation (U.S.A.), 0.1 wt. % of talc

**Sample 2** - 50 lbs. of Dylene 8, 0.1 wt. % of talc, 0.5 wt. % of Hydrocerol CF - a citric, acide/sodium bicarbonate nucleating and blowing agent aid

**Sample 3** - 50 lbs. of Dylene 8, 0.5 wt. % of talc

**Sample 4** - 50 lbs. of Dylene 8, 02 wt. % of Hydrocerol CF

**Sample 5** - 50 lbs. of Dylene 8, 0.2 wt. % of Hydrocerol TAF - a citric acide/sodium bicarbonate nucleating and blowing agent aid

**Sample 6** - 50 lbs. of Dylene 8, 0.2 wt. % of BIH-70.

The above-noted Samples were charged to the above-noted extruder and extruded with the addition of a blowing agent at a rate of 60 lbs./hour. The results are as follows:

| SAMPLE NUMBER | 1 | 2 | 3 | 4 | 5 | 6 | 7 | 8 | 9 | 10 |
|---|---|---|---|---|---|---|---|---|---|---|
| | 1 | 1 | 1 | 2 | 3 | 3 | 4 | 5 | 6 | 6 |
| Zone 1 (°F) | 375 | 375 | 375 | 375 | 375 | 375 | 375 | 375 | 375 | 375 |
| Zone 2 (°F) | 430 | 430 | 430 | 430 | 430 | 430 | 430 | 430 | 430 | 430 |
| Zone 3 (°F) | 420 | 420 | 420 | 420 | 420 | 420 | 420 | 420 | 420 | 420 |
| Zone 4 (°F) | 420 | 420 | 420 | 420 | 420 | 420 | 420 | 420 | 420 | 420 |
| Zone 5 (°F) | 360 | 330 | 330 | 330 | 330 | 330 | 330 | 330 | 330 | 330 |
| Zone 6 (°F) | 360 | 330 | 330 | 330 | 330 | 330 | 330 | 330 | 330 | 330 |
| Adapter (°F) | 335 | 335 | 335 | 335 | 315 | 315 | 315 | 315 | 315 | 315 |
| Die (°F) | 335 | 335 | 335 | 335 | 315 | 315 | 315 | 315 | 315 | 315 |
| R.P.M. | 15 | 15 | 15 | 20 | 18 | 18 | 18 | 18 | 18 | 18 |
| Head Pressure ($\#/in.^2$) | 2200 | 1500 | 1500 | 1300 | 1600 | 1400 | 1700 | 1450 | 1800 | 1500 |
| Injection Pressure ($\#/in.^2$) | 2000 | 1500 | 1600 | 1400 | 1690 | 1500 | 1700 | 1470 | 1600 | 1500 |
| Blowing Agent* | F-12 | IPA | IPA | IPA | F-12 | IPA | IPA | IPA | IPA | ETOH |
| Blowing Agent Injection Rate (Gallons (U.S.)/hr.) | .78 | .78 | .60 | .60 | .75 | .60 | .60 | .60 | .60 | .60 |

*F-12, Freon F-12 made by Dupont Chemical Corp.

IPA, isopropyl alcohol

TOH, ethyl alcohol (denatured)

The foams produced in Examples 1-10 inclusive were low density with fine cell structure and exhibited little or no dimensional change on aging after extrusion.

## Claims

1. A method of making a styrenic foam characterized by charging an extruder with a mixture of a styrenic polymer and a nucleating agent, melting said mixture in said extruder, adding a lower aliphatic alcohol blowing agent to said melted mixture and extruding said melted mixture through a die to form said foam.

2.  The method of claim 1 characterized in that said lower aliphatic alcohol blowing agent is isopropyl alcohol.

3.  The method of claim 1 or 2 characterized in that said blowing agent is present in amounts of from about 3 wt. % to about 15 wt. %.

4.  The method of claim 1, 2 or 3, characterized in that said styrenic polymer is polystyrene.

# EUROPEAN SEARCH REPORT

European Patent Office

**Application Number**

EP    92 10 4361

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 417 405 (HERMANN BERSTORFF)<br>* line 13 - line 27 *<br>* column 9 - column 19; examples 14,16 *<br>* claims 1,2,8-10 * | 1-4 | C08J9/14<br>//C08L25:06 |
| A | US-A-3 947 387 (LUNDBERG)<br>* column 6, line 15 - line 35 *<br>* column 8, line 36 - line 43 *<br>* claims 1,4 * | 1-4 | |
| | | | TECHNICAL FIELDS SEARCHED (Int. Cl.5)<br><br>C08J |

The present search report has been drawn up for all claims

| Place of search | Date of completion of the search | Examiner |
|---|---|---|
| THE HAGUE | 30 JUNE 1992 | René OUDOT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)